# EUROPEAN PATENT APPLICATION

(11) **EP 4 674 506 A1**
(43) Date of publication of application: **07.01.2026**
(21) Application number: 24185600.4
(22) Date of filing: 01.07.2024
(51) Int. Cl.: B01D 53/04

(54) **SORPTION FILTER ELEMENT, SORPTION FILTER CARTRIDGE, AND METHOD OF MANUFACTURING SORPTION FILTER ELEMENT**

(71) Applicant: MANN+HUMMEL GmbH, 71636 Ludwigsburg (DE)
(72) Inventor: JESSBERGER, Thomas, 71636 Ludwigsburg (DE); WELLER, Benedikt, 71636 Ludwigsburg (DE); EVLEKLI, Coskun, 71636 Ludwigsburg (DE)
(74) Representative: Mann + Hummel Intellectual Property

(57) **Abstract**

A sorption filter element (19) comprises a filter medium (24), and a heater system (25) covering at least one filter surface (32) of the filter medium (24). The filter medium (24) and the heater system (25) are repeatedly folded along parallel aligned folding axes (26 - 30)

## Description

### Technical Field

Embodiments relate to a sorption filter element, a sorption filter cartridge comprising such a sorption filter element and a method of manufacturing such a sorption filter element.

### Background Art

In the case of vehicles that are at least partially electrically powered, it is advisable to save as much energy as possible in order to achieve the longest possible range. For reasons of comfort, the passenger compartment of such a vehicle can usually be air conditioned with the aid of an air conditioning system. With regard to the desired energy savings, it is advantageous if the air conditioning system for air conditioning the passenger compartment draws in as little fresh air as possible from the vehicle's surroundings and heats or cools it, but instead recirculates and air conditions the air in the passenger compartment.

In the aforementioned recirculation mode for air conditioning the passenger compartment, however, water contained in the exhaled air of occupants or passengers can accumulate in the passenger compartment, which can lead to fogging of windows, for example a windshield or side windows, of the motor vehicle. The reason for this is that the dehumidifying effect of an air conditioning system, which results from a dew point undershoot in the evaporator heat exchanger, cannot be used during the recirculation mode. This must be avoided or at least reduced with regard to safety aspects.

Furthermore, carbon dioxide contained in the exhaled air can also accumulate in the passenger compartment. This can lead to concentration problems or even health problems for the occupants. This, too, must be prevented or at least reduced with regard to both safety and health aspects, since in the worst-case scenario, an excessively high concentration of carbon dioxide in the passenger compartment air can reduce the driver's ability to concentrate to such an extent that accidents are imminent.

### Summary

It is therefore an objective of the embodiments to provide an improved sorption filter element.

Accordingly, a sorption filter element is provided. The sorption filter element comprises a filter medium and a heater system covering at least one filter surface of the filter medium, and wherein the filter medium and the heater system are repeatedly folded along parallel aligned folding axes.

The filter medium is suitable for adsorbing and/or absorbing carbon dioxide and water. However, also substances like nitrogen oxides (NOX) and/or volatile organic compounds (VOCs) can be adsorbed and/or absorbed by the filter medium. Examples of volatile organic compounds are higher hydrocarbons. The filter medium may also be suitable for adsorbing and/or absorbing sulfur dioxide (S02).

In the present context, "sorption" refers to processes that lead to an enrichment of a substance, for example carbon dioxide or water, within a phase or on an interface between two phases. Accumulation within a phase is referred to as absorption, while accumulation at the interface is referred to as adsorption. In the present context, "desorption" refers to processes in which atoms or molecules, in particular carbon dioxide or water, leave the surface of a solid. Desorption thus generally represents the reverse process of sorption. By applying heat to the sorbent, the adsorbed and/or absorbed substances can be released from the sorbent.

In a sorption mode, the filter medium adsorbs and/or absorbs different substances like carbon dioxide and/or water. In a desorption mode, the enriched substances can be released from the filter medium. Thus, the filter medium can be regenerated. In the desorption mode, heat is applied to the filter medium, in particular to the sorbent. The sorption filter element may be a pure adsorption filter element or may be designated as such. The filter medium may be a pure adsorption filter medium or may be designated as such. The sorption filter element and/or the filter medium can be easily and quickly replaced. The sorption mode may also be, or be designated as, a pure adsorption mode. The desorption mode may also be referred to as regeneration mode.

The filter medium may comprise several sorbents. In particular, a sorbent suitable to sorb, especially to adsorb, carbon dioxide may be provided. This sorbent may be referred to as carbon dioxide sorbent or CO2 sorbent. Another sorbent may be provided that is suitable to sorb, especially adsorb, water. This sorbent may be referred to as water sorbent or H2O sorbent. The sorbents may be in granular or fibrous form, in particular in bulk form. In particular, the sorbents are fixed by means of a carrier material. The sorbents may also be pure adsorbents or be designated as such. The raw air may be guided through the sorbents in a parallel or serial way.

In the desorption mode, regeneration air can be taken from an environment of the sorption filter element, in particular, to the filter medium. The clean air can be used as regeneration air. Initially, the regeneration air is unloaded. In the desorption mode, the unloaded regeneration air is loaded with carbon dioxide and water and supplied to the environment of the sorption filter device as loaded regeneration air. By the fact that the regeneration air is "unloaded" with carbon dioxide and water, it is to be understood in particular that the regeneration air can absorb stored carbon dioxide and water in the filter medium being in desorption mode. However, this does not preclude the unloaded regeneration air from also containing a certain amount of carbon dioxide and water. However, the unloaded regeneration air is not saturated with carbon dioxide and water.

The sorption filter element can be part of a heating, ventilation, and air conditioning (HVAC) system of a vehicle. The sorption filter element can be exchangeable within the HVAC system.

The heater system can be configured to apply heat to the filter medium, in particular, during the regeneration mode. Hereby, electrical energy can be used to heat up the heater system and, in consequence, the filter medium as well. The heater system may comprise a number of electrical components which produce heat in case an electrical current is guided through the electrical components. Nonetheless, other means of heating the heater system are feasible as well. The heater system can cover or be attached to two of the filter surfaces of the filter medium. In other words, the filter medium can be surrounded by the heater system, for example, accommodated between two layers of the heater system. Nonetheless, the heater system may cover or be attached to exactly one of the filter surfaces of the filter medium. In this context, the term "filter surface" can be understood as one of the largest surfaces of the filter medium regarding its surface area. The filter surface can be penetrated by the air during the usage of the filter medium, in particular, during adsorption or desorption mode, respectively. Hence, the filter medium comprises at least two of the filter surfaces.

In the present context, the term "folded" can be understood as that an object is folded or bent along one of the folding axes, wherein the folding axes may represent straight lines. In the present context, the term "repeatedly folded" can be understood as that an object is folded or bent several times along folding axes. In the present context, the direction of the folding or bending, respectively, can be defined as folding or bending around or along the respective folding axis following the right-hand rule. Hereby, the direction of the folding or bending, respectively, can be oriented repeatedly towards the same direction. For example, hypothetically speaking, in case an even plane is bent four times towards the same direction with a constant angle of 90° with the respective folding axes being aligned parallel to each other, a pipe with rectangular cross-section is formed. Nonetheless, the object may be bent or curved, respectively, towards alternating directions. For example, hypothetically speaking, in case the even plane is repeatedly bent towards alternating directions with the respective folding axes being aligned parallel to each other, a harmonica with a cross-section of a sawtooth-shaped line is formed.

Keeping said in mind, the filter medium and the heater system are repeatedly folded along parallel aligned folding axes. Both the heater system and the filter medium may be repeatedly folded according to the same pattern in terms of the directions. In other words, the filter medium and the heater system may be configured as being parallel to one another concerning their entire dimensions.

In the present context, the term "parallel" can be understood as that the respective objects are oriented towards the same direction with an angle deviation of less than 10°, 5°, 2°, 1°, or 0.5°.

That both the filter medium and the heater system are repeatedly folded along parallel aligned folding axes has the beneficial aspect that the heater system can be arranged in direct contact with the filter surface forming a contact surface which covers at least most of a surface area of the filter surface although the filter medium is repeatedly folded. This way, the surface area of the filter surface can be increased, while the heating of the filter medium can be accelerated due to an increase of said contact surface. Eventually, the energy required to heat the filter medium be decreased.

In embodiments, the sorption filter element has a shape of a harmonica comprising a plurality of folding edges, each of the plurality of folding edges being formed by folding the heater system and the filter medium along the folding axes. The term "harmonica" is used to illustrate that the sorption filter element, which is configured to be produced from an originally flat object, is repeatedly folded along parallel aligned folding axes with respect to alternating directions. Hence, a cross-section of the filter element regarding a plane which is oriented perpendicular to the folding axes, has the shape of a sawtooth. The "harmonica shape" can increase the filter surface while still limiting overall dimensions of the sorption filter element.

In embodiments, the heater system covers at least 30%, 40%, 50%, 60%, 70%, 80%, 90%, or 95% of the at least one filter surface of the filter medium. A distance between the heater system and the at least one filter surface of the filter medium is less than 30 mm. An increase of the contact surface accelerates the heating of the heater system, enhancing precision and agility of a controlling of the regeneration mode. For example, within the regeneration mode, the heater system can rapidly adjust to a desired temperature, thus reacting to a possible variation of the desired temperature and/or volume flow of the air rapidly.

In embodiments, the filter medium comprises a granulate portion. The filter medium can comprise at least two filter coats of non-woven fiber material. In between them, the filter medium can comprise the granulate portion which comprises at least one sorbent. Hence, the granulate portion can be sandwiched between the at least two filter coats. The filter coats may be identical to the carrier material. The granulate portion being "sandwiched" between at least two filter coats can mean that the granulate portion is arranged between the filter coats. The number of sorbents is arbitrary. In the case that the granulate portion comprises a plurality of sorbents, the sorbents can be mixed. Alternatively, the sorbents can be arranged in layers. Nonetheless, the filter medium can also be configured as a filter foil, in particular, the filter foil can comprise at least one layer of a fiber, fleece, and/or other fluid-permeable material.

In embodiments, the heater system comprises a heating foil, a heating wire and/or a heating coil. In case the heater system comprises the heating foil, the heater system and the filter medium can be configured to have a planar contact with one another. This way, the filter medium can be configured to be heated via substantially the whole filter surface. The term "substantially" can be understood as at least 30%, 40%, 50%, 60%, 70%, 80%, or 90%. The heating foil can be configured as a homogeneous foil, for example, a foil of an electrically conductible material. Nonetheless, the heating foil may be designed as a non-homogeneous foil, hence, comprising both electrically conductible and non-conductible materials. In case the heater system comprises a heating wire or a heating coil, an electrical conductor in the shape of a line can be attached to the filter medium, wherein the heating wire or heating coil can be arranged in loops along the filter medium, hence, the heating wire or heating coil can be folded or bent, respectively, along more than one dimension. A heat transfer between the heater system and the filter medium can be enhanced in case the heater system comprises a heater foil. On the other hand, the manufacturing of the heating wire and/or heating coil can be easier than the manufacturing of the heating foil, saving costs.

In embodiments, the heater system comprises a number of heating patches, each of the number of heating patches being electrically connected to at least two supply wires oriented perpendicular to the folding axes. The number of heating patches can be arranged in a two-dimensional or three-dimensional manner, hence, the number of heating patches can form an array along at least two dimensions. Hereby, a first one of the dimensions can be oriented parallel to the folding axes while a second dimension can be arranged perpendicular to the first dimension, following the filter medium. Between two adjacent ones of the number of heating patches, an electrically non-conductible material can be arranged. In other words, the heater system can form the shape of a chess board. The at least two supply wires are arranged outside of the filter medium. The number of heating patches can be structured as rows, oriented parallel to the first dimension and the folding axes, and columns, oriented parallel to the second dimension. Each of the heating patches of one of the rows is connected with via at least two connecting wires, both being oriented parallel to the folding axes and the first dimension. In other words, each of the connecting wires connects all members of the same row. All the connecting wires are connected with one of the supply wires. Hereby, the supply wires can be arranged perpendicular to the folding axes and be located outside of the filter medium. Hereby, the number of heating patches can be connected to the supply wires forming a serial, parallel, or combined circuit. Due to the usage of the number of heating patches, the heater system is more stable against possible malfunctions of single electrical components of the heater system.

In embodiments, the heater system is printed onto a substrate attached to the filter medium by gluing, welding, or the like. In the present context, the term "printed" can be understood as the result of an inkjet process, in particular, the result of a process of printing a mixture comprising silver and a liquid onto an object. Nonetheless, other means of printing processes are feasible as well. The substrate can be an additional layer which can be attached to the filter medium by means of gluing, welding, or the like. The substrate can be folded together with the filter medium. In particular, the substrate is thermally conductive. In addition, the substrate can be electrically non-conductive. This way, the transfer of the heat to the filter medium is improved.

In embodiments, the heater system and the filter medium are an integral part, and the heater system is printed onto the filter medium. In the present context, the term "integral part" can be understood as a part comprising a plurality of components, whereby after the manufacturing of the integral part, the components cannot be removed from one another in a non-destructive manner. Hence, the heater system, represented by the heating wire, heating coil, and/or the number of heating patches, can be printed directly onto the filter medium. This way, the manufacturing of the sorption filter element is simplified and accelerated. In addition, the transfer of heat to the filter medium can be improved.

In embodiments, the heater system is a flexible circuit board attached to the filter medium by means of gluing, welding, or the like. The heater system in the shape of the flexible circuit board and the filter medium can be configured to be produced as separate parts. The flexible circuit board can comprise a flexible medium or layer, comprising the number of heating patches, the heating wire, and/or the heating coil. The heater system and the filter medium can be attached to one another by means of gluing, welding, or the like. The gluing, welding, or the like may be configured to be reversible, thus easing a possible recycling and/or replacement of the filter medium and/or the heater system.

In embodiments, the heater system and/or the substrate comprise a perforation, the perforation comprising a plurality of holes and/or slits oriented perpendicular to the folding axes. The perforation can cover a perforation area, wherein the perforation area can have a minimum surface area of at least 5%, 10%, 20%, 30%, 40%, or 50% of the surface area of the filter surface, wherein the perforation area can be limited by a maximum value of no more than 90%, 80%, 70%, 60%, or 50%, of the surface area of the filter surface. The perforation enables or eases the penetration of the heater system by the air flowing through the sorption filter element. An increase of the perforation area eases the flow of air through the sorption filter element, thus, may potentially increase the volume flow of the air. On the other hand, a decrease of the perforation area may improve the effectiveness of the heater system due to an increase of the contact surface between the heater system and the filter medium, hence, accelerating the regeneration of the filter medium. Other geometric shapes of the perforation are feasible as well. In addition, the slits can be oriented parallel to the folding axes as well.

Furthermore, a sorption filter cartridge for air conditioning an interior of a motor vehicle is provided. The sorption filter cartridge comprises the sorption filter element as mentioned above and a fluid permeable housing. The housing may comprise fixation features to fix the sorption filter cartridge in the vehicle. The housing can be fluid permeable to allow the flow of air through the sorption filter cartridge. The sorption filter cartridge may further comprise adequate means for fixing the sorption filter element inside the sorption filter cartridge.

Furthermore, a method of manufacturing a sorption filter element comprising a filter medium and a heater system is provided. The method comprises covering at least one filter surface of the filter medium with the heater system, and repeatedly folding the filter medium and the heater system along parallel aligned folding axes.

In embodiments, the covering may comprise printing the heater system onto the filter medium by an inkjet process, in particular, by printing a mixture comprising silver and a liquid.

In embodiments, the covering may comprise printing the heater system onto a substrate, and attaching the substrate to the filter medium by gluing, welding, or the like.

In embodiments, the covering may comprise producing the heater system as a flexible circuit board, and attaching the flexible circuit board to the filter medium by gluing, welding, or the like.

### Brief Description of Drawings

Fig. 1 is a schematic view of one embodiment of a motor vehicle.
Fig. 2 is a schematic view of one embodiment of a mechanism for the motor vehicle according to Fig. 1.
Fig. 3 is a schematic perspective view of one embodiment of a sorption filter cartridge for the mechanism according to Fig. 2.
Fig. 4 is a schematic perspective view of a further embodiment of the sorption filter cartridge according to Fig. 3.
Fig. 5 is a schematic perspective view of one embodiment of a sorption filter element for the sorption filter cartridge according to Fig. 4.
Fig. 6 is a schematic sectional view of the embodiment of the sorption filter element according to Fig. 5.
Fig. 7 is a schematic view of one embodiment of a heater system for the sorption filter element according to Fig. 5.
Fig. 8 is a schematic sectional view of a further embodiment of the sorption filter element according to Fig. 5.
Fig. 9 is a schematic sectional view of a further embodiment of the sorption filter element according to Fig. 5.
Fig. 10 is a schematic sectional view of a further embodiment of the sorption filter element according to Fig. 5.
Fig. 11 is a schematic view of one embodiment of a method of manufacturing the sorption filter element according to Fig. 5.
Fig. 12 is a schematic view of one embodiment of one step of the method according to Fig. 11.
Fig. 13 is a schematic view of a further embodiment of the one step of the method according to Fig. 11.
Fig. 14 is a schematic view of a further embodiment of the one step of the method according to Fig. 11.

In the figures, identical orfunctionally identical elements have been given the same reference signs unless otherwise indicated.

### Description of Embodiments

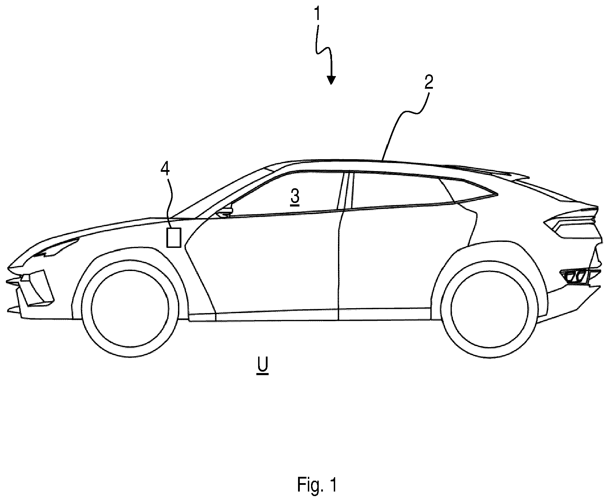

Fig. 1 shows a schematic view of an embodiment of a motor vehicle 1. The motor vehicle 1 may be an electric vehicle or a hybrid vehicle. However, the motor vehicle 1 may also be driven by means of an internal combustion engine. The motor vehicle 1 comprises a body 2 which encloses an enclosed air volume 3. "Enclosed" in this context means that the body 2 defines boundaries or a geometric extension of the enclosed air volume 3. However, this does not necessarily mean that the enclosed air volume 3 cannot be in air exchange with an environment U of the motor vehicle 1.

The enclosed air volume 3 is an interior or passenger compartment of the motor vehicle 1. However, the enclosed air volume 3 may also be associated with a watercraft, a construction machine or a construction vehicle, a rail vehicle, an agricultural machine or an agricultural vehicle, or an aircraft. However, the enclosed air volume 3 may also be part of a building or a stationary machine.

In the following, however, it is assumed that the enclosed air volume 3 is the passenger compartment of the motor vehicle 1. Therefore, the enclosed air volume 3 is hereinafter referred to as the passenger compartment. The passenger compartment 3 can be air conditioned by means of a heating, ventilation, and air conditioning (HVAC) system 4. To extend a range of such an electrically driven motor vehicle 1, it is desirable to save as much energy as possible. With reference to the HVAC system 4, this means that it should draw in as little fresh air as possible from the environment U of the motor vehicle 1 to air condition the passenger compartment 3.

However, when recirculated air taken in the passenger compartment 3 is used to air condition the passenger compartment 3, water (H2O) contained in the exhaled air of occupants or passengers may accumulate in the passenger compartment 3, which may cause windows, for example a windshield or side windows, of the motor vehicle 1 to fog. This must be avoided or at least reduced with regard to safety aspects. Furthermore, carbon dioxide (CO2) contained in the exhaled air can also accumulate in the passenger compartment 3. This can lead to concentration problems or even health impairments for the occupants. This, too, must be prevented or at least reduced with regard to both safety and health aspects.

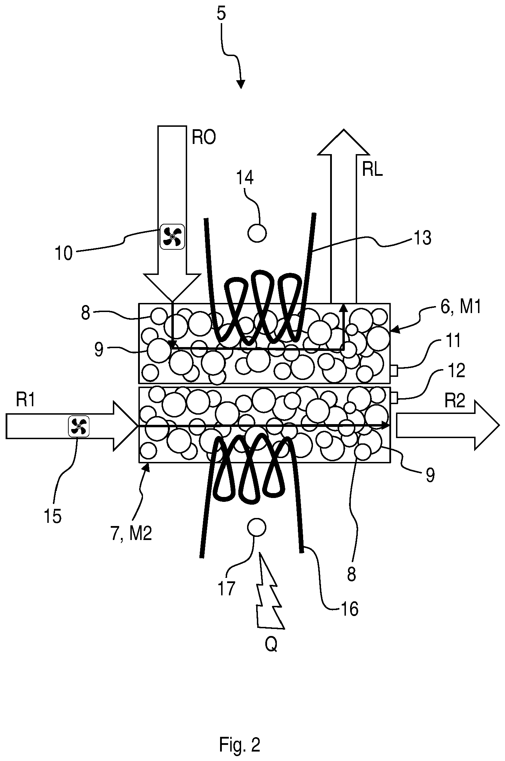

Fig. 2 shows a schematic view of an embodiment of a mechanism 5 for the combined reduction of CO2 and H2O, in particular water vapor, within the passenger compartment 3. The mechanism 5 is part of the HVAC system 4. With the aid of the mechanism 5, the previously mentioned disadvantages can be prevented, or their effect at least reduced. In addition, the mechanism 5 can also be used to prevent impurities from the environment U from entering the passenger compartment 3, since the preparation of the circulating air means that the intake of ambient air can be largely dispensed with.

The mechanism 5 comprises a first sorption filter device 6 and a second sorption filter device 7. "Sorption" is a collective term for processes that lead to an accumulation of a substance within a phase or at an interface between two phases. The enrichment within a phase is more precisely called absorption, and that at the interface adsorption. This means that the sorption filter devices 6, 7 are suitable for adsorbing and/or absorbing substances such as CO2 and H2O, but also nitrogen oxides (NOX) and/or volatile organic compounds (VOCs). Examples of volatile organic compounds are higher hydrocarbons. The sorption filter devices 6, 7 may also be suitable for adsorbing and/or absorbing sulfur dioxide (SO2). However, the sorption filter devices 6, 7 may be pure adsorbing units or may be designated as such.

The sorption filter devices 6, 7 may be interchangeable and, as will be explained further below, can be operated alternately in a sorption mode M1 and in a desorption mode M2. The sorption mode M1 may also be referred to as the adsorption mode. The desorption mode M2 may also be referred to as regeneration mode. That is, the first sorption filter device 6 is in the sorption mode M1 when the second sorption filter device 7 is in the desorption mode M2 and vice versa. Thus, both sorption filter devices 6, 7 are never in the same mode M1, M2 at the same time. The sorption filter devices 6, 7 each may have a cartridge shape so that they can be easily exchanged.

Each sorption filter device 6, 7 comprises a first sorbent 8 and a second sorbent 9. The sorbents 8, 9 may be adsorbents or can be designated as such. For example, the first sorbent 8 is suitable for adsorbing CO2. Accordingly, the second sorbent 9 may be suitable to adsorb H2O. The two sorbents 8, 9 may thus remove H2O and CO2 from the passenger compartment 3. The first sorbent 8 is illustrated with small circles. The second sorbent 9 is illustrated with large circles. Other sorbents may also be provided, suitable for sorbing NOX or VOCs, for example. Thus, any number of different sorbents 8, 9 can be provided for processing the circulating air in the passenger compartment 3.

For example, in addition to the sorbents 8, 9, at least one further sorbent or also several further sorbents (not shown) are provided which are suitable for removing fine particles, NOx and/or VOCs from raw air RO. The further sorbents may be introduced between two carrier layers, in particular carrier layers made of a non-woven fabric. Alternatively, the sorbents 8, 9 and the further sorbents may be mixed together. The further sorbents may comprise activated carbon which, in particular in the form of a bulk, may be introduced between the two carrier layers. The further sorbent or sorbents may be mixed with the first sorbent 8 and/or with the second sorbent 9 to build up one or more mixed bulk layers.

Furthermore, the sorption filter devices 6, 7 can also be suitable for removing allergens, bacteria and/or viruses from the raw air RO in addition to CO2 and H2O. This can be done by a functional coating of carrier materials, for example nonwovens, or by a functional coating of the sorbents 8, 9. Furthermore, the sorption filter devices 6, 7 can have at least one fragrance component from a comfort aspect.

The sorbents 8, 9 can each be in the form of spherical granules. The sorbents 8, 9 may be fixed to a carrier material or may be fixed with the aid of a carrier material. The sorption filter devices 6, 7 can each have a cylindrical, in particular a hollow-cylindrical, a pie-shaped or a rectangular geometry. By a "pie-shaped" geometry is meant in particular a flat circular-cylindrical geometry.

In Fig. 2, the first sorption filter device 6 is in the previously mentioned sorption mode M1. The second sorption filter device 7 is in the desorption mode M2. In the sorption mode M1, raw air RO loaded with CO2 and H2O from the passenger compartment 3 is fed to the first sorption filter device 6. A first blower 10 may be provided for this purpose. The raw air RO is passed through the first sorption filter device 6 at least in sections, with the sorbents 8, 9 purifying the raw air RO of CO2 and H2O. The purified raw air RO is fed back to the passenger compartment 3 as clean air RL.

The first sorption filter device 6 can have a temperature sensor 11. However, the first sorption filter device 6 can comprise a plurality of temperature sensors 11. For example, there can be provided two temperature sensors 11. The second sorption filter device 7 can also have a temperature sensor 12. However, the second sorption filter device 7 can comprise a plurality of temperature sensors 12. For example, there can be provided two temperature sensors 12.

An optional first heater 13 is assigned to the first sorption filter device 6, with the aid of which heat Q can be supplied to the sorbents 8, 9. In the sorption mode M1, the first heater 13 is inactive, so that it does not supply heat Q to the first sorption filter device 6. The first heater 13 can be a heating wire passed through the first sorption filter device 6, which is energized to introduce heat Q and thus heats the sorbents 8, 9. However, heat Q may also be introduced by any other means. For example, heat Q may be waste heat from an electric motor used to drive the motor vehicle 1. Heat Q may also be waste heat from a conventional internal combustion engine, a battery cooling system, or a fuel cell cooling circuit. The first heater 13 may also be a heat exchanger or comprise a heat exchanger. A temperature sensor 14 can be assigned to the first heater 13.

In the desorption mode M2, unloaded regeneration air R1 is supplied to the second sorption filter device 7 being loaded with CO2 and H2O. A second blower 15 can be used for this purpose. By the fact that the unloaded regeneration air R1 is "unloaded" with CO2 and H2O, it is to be understood that the unloaded regeneration air R1 can absorb CO2 and H2O stored in the second sorption filter device 7. That is, the unloaded regeneration air R1 may also have some content of CO2 and H2O. However, the unloaded regeneration air R1 is not saturated with CO2 and H2O. The unloaded regeneration air R1 can be taken from the passenger compartment 3 or the environment U, for example.

Furthermore, an optional second heater 16 is provided, by means of which the second sorption filter device 7 is heated in the desorption mode M2 and thus heat Q is introduced into the second sorption filter device 7. The first heater 13 and the second heater 16 may be of identical construction and may be operated alternately. As previously mentioned, heat Q may also be supplied, for example, in the form of waste heat from an electric motor. However, as also mentioned previously, heat Q may also be waste heat from a conventional internal combustion engine, a battery cooling system or a fuel cell cooling circuit. The second heater 16 may also be a heat exchanger or comprise a heat exchanger. A temperature sensor 17 can be assigned to the first heater 13.

When the sorbents 8, 9 are heated in the desorption mode M2 of the second sorption filter device 7, they release CO2 and H2O to the unloaded regeneration air R1. In other words, CO2 and H2O are desorbed. A temperature above 55 °C may be required for desorption. The unloaded regeneration air R1 is passed through the second sorption filter device 7, absorbs CO2 and H2O there and is discharged from the second sorption filter device 7 as loaded regeneration air R2. In particular, the loaded regeneration air R2 is supplied to the environment U.

The sorption filter devices 6, 7 are designed identical. Each sorption filter device 6, 7 comprises a sorption filter cartridge 18. In the following, only the first sorption filter device 6 will be referred to. However, all explanations concerning the first sorption filter device 6 can be applied to the second sorption filter device 7 and vice versa.

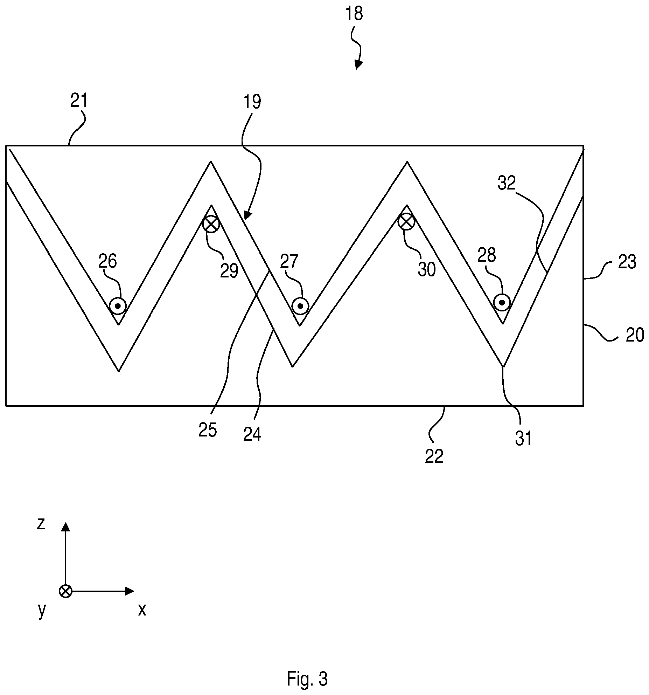

Fig. 3 shows a schematic perspective view of one embodiment of a sorption filter cartridge 18 with a sorption filter element 19 and a fluid-permeable housing 20. The sorption filter device 6 (see Fig. 2) may comprise two of the sorption filter cartridges 18. Each of the sorption filter cartridges 18 can be removed from the sorption filter device 6 and put again into the sorption filter device 6. The sorption filter cartridge 18 can be named sorption box, in particular adsorption box. For the following, a right-handed orthogonal coordinate system is allocated to the sorption filter cartridge 18 with an x-axis x, a y-axis y, and a z-axis z. The housing 20 comprises openings which are located at a top side 21 and a bottom side 22 of the housing 20. A side wall 23 of the housing 20 surrounds the sorption filter element 19 with respect to at least four sides. The sorption filter element 19 comprises a filter medium 24 and a heater system 25 which are both repeatedly folded along parallel aligned folding axes 26 - 30. Hereby, the repeated folding is performed in alternating directions. In consequence, the filter medium 24 and the heater system 25 are folded along the folding axes 26 - 28 towards a first direction, and along the folding axes 29 and 30 towards a second direction, while the first direction and the second direction are oriented towards opposite direction. Nonetheless, all of the folding axes 26 - 30 are oriented parallel to the y-axis y. This way, a harmonica, formed by the folding of the filter medium 24 and the heater system 25, is extending substantially along the x-axis x. Note, that in the illustration of Fig. 3, only a very limited number of the folding axes 26 - 30 are shown for illustration purposes. Nonetheless, the number of the folding axes 26 - 30 can be arbitrary. A number of folding edges 31 are formed due to the repeatedly folding of the heater system 25 and the filter medium 24. Note, that in Fig. 3, only one of the folding edges 31 is referred to with a reference sign. The filter medium 24 comprises a filter surface 32 which represents the surface of the filter medium 24 which is penetrated by air during usage of the sorption filter cartridge 18.

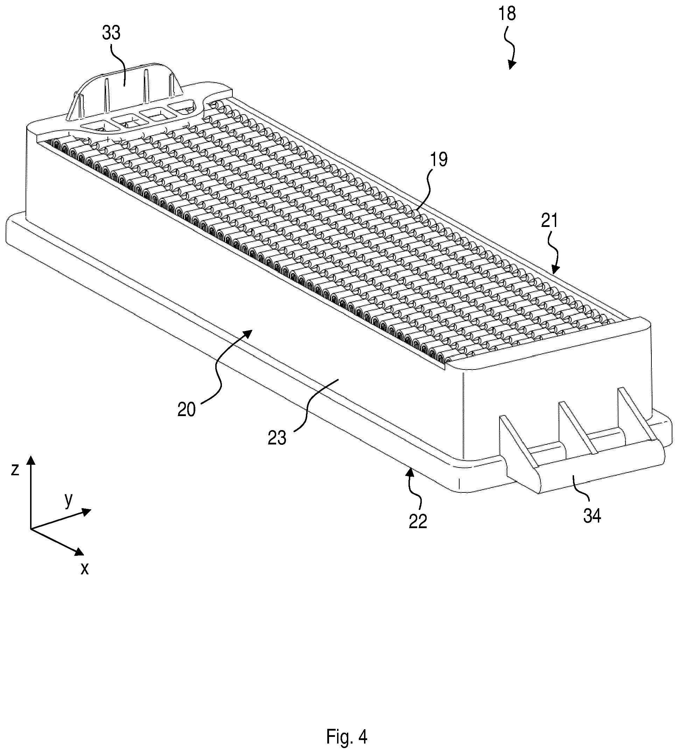

Fig. 4 shows a schematic perspective view of a further embodiment of the sorption filter cartridge 18. For this further embodiment of the sorption filter cartridge 18, the previously mentioned description of the first embodiment of the sorption filter cartridge 18 is relevant as well. Hence, in the following, only the differences between both embodiments are addressed.

The housing 20 further comprises fixation features 33, 34 for fixing the sorption filter cartridge 18 inside the sorption filter device 6. The fixation features 33, 34 can be arranged at the side wall 23 of the sorption filter cartridge 18. During usage of the sorption filter cartridge 18, hence, during the sorption mode M1 and/or during the absorption mode M2, air is flowing through the sorption filter cartridge 18 from the top side 21 to the bottom side 22 or vice versa. Note that the embodiment of the sorption filter cartridge 18 illustrated in Fig. 4 comprises a significantly increased number of folding axes 26 - 30 and folding edges 31 than the one illustrated in Fig. 3.

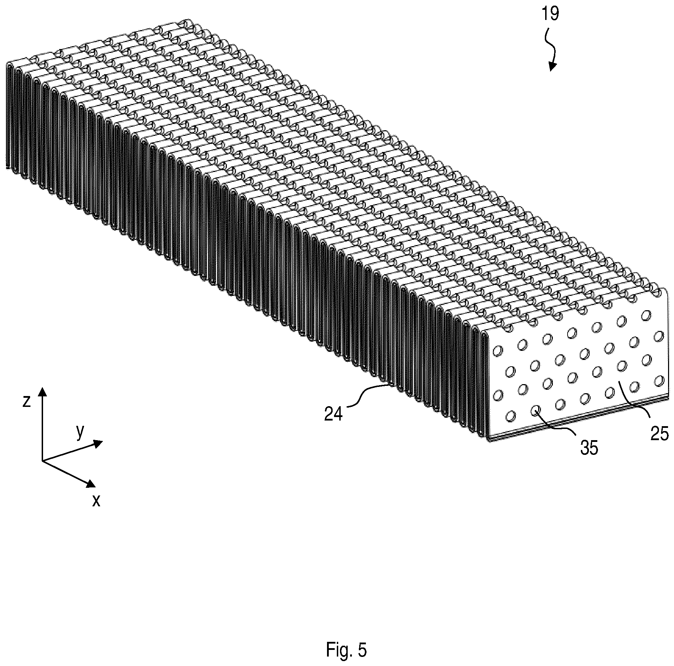

Fig. 5 shows a schematic perspective view of one embodiment of the sorption filter element 19 for the sorption filter cartridge 18. It illustrates the repeated folding of the filter medium 24 and the heater system 25. Note, that in Fig. 5, due to thin dimensions of the filter medium 24 and the heater system 25, the filter medium 24 and the heater system 25 are not to distinguish optically. The heater system 25 comprises a perforation 35 which is illustrated in Fig. 5 as circular holes. Nonetheless, the perforation 35 can be designed in several shapes, for example as rectangular holes or slits, as well. The perforation 35 enables the penetration of the heater system 25 by air.

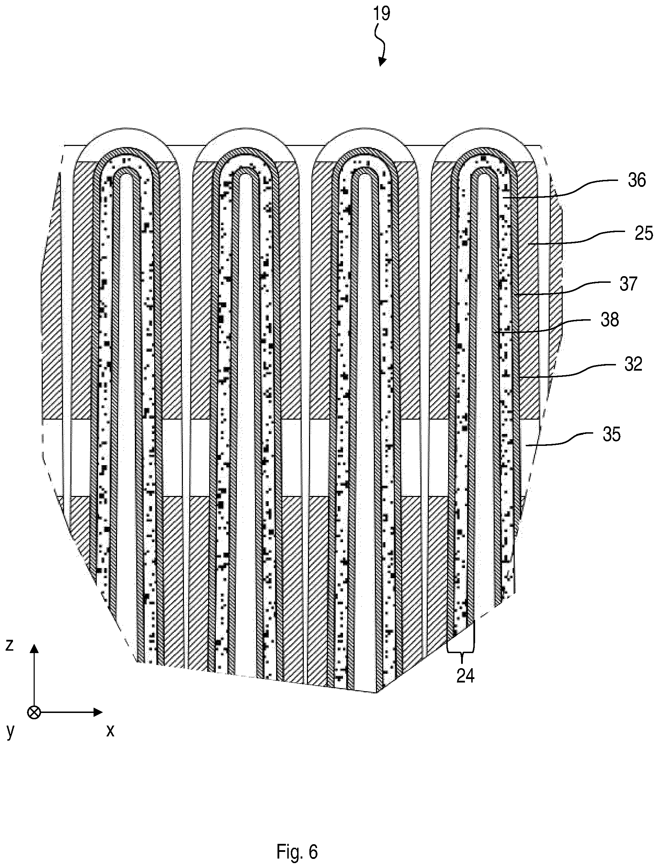

Fig. 6 shows a schematic sectional view of the before-mentioned embodiment of the sorption filter element 19. The filter medium 24 comprises a granulate portion 36 with at least one sorbent, wherein the granulate portion 36 is sandwiched between two filter coats 37, 38. The filter coats 37, 38 are fluid-permeable and are configured to contain the granulate portion 36. The heater system 25 is covering or attached to the filter surface 32 of the filter medium 24. Fig. 6 further shows cross-sections of the perforation 35. A distance between the heater system 25 and the filter surface 32 of the filter medium 24 may be less than 30 mm, in particular, less than 5 mm.

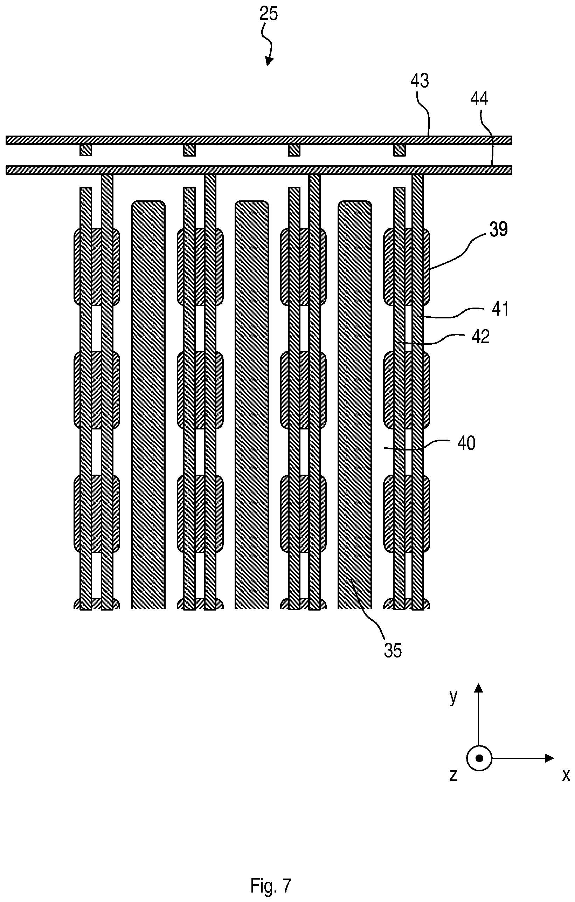

Fig. 7 shows a schematic view of one embodiment of the heater system 25. The heater system 25 comprises a number of heating patches 39 of which only one is referred to with a reference sign. Note that the number of heating patches 39 is arbitrary. The heating patches 39 are arranged in the shape of an array along two dimensions, wherein one of the dimensions is oriented parallel to the folding axes 26 - 30 and to the y-axis y. Note, that Fig. 7 shows the embodiment of the heater system 25 before the folding of the heater system 25. In consequence, the second dimension of the array is oriented parallel to the x-axis x. The heating patches 39 can be positioned on an electrically non-conductive substrate 40. Note, that in case the heater system 25 is manufactured using a printing process, the substrate 40 is not required since air between the heating patches 39 and other electrical components fulfills the isolative function of the substrate 40. Each of the number of heating patches 39 is connected via two connecting wires 41, 42, wherein in Fig. 7, only two of the connecting wires 41, 42 are referred to with a reference sign. All of the connecting wires 41, 42 are connected to each one of two supply wires 43, 44. The supply wires 43, 44 are connected to an external power source. In between the heating patches 39, the perforation 35 is located. In the embodiment of the heater system 25 illustrated in Fig. 7, the perforation 35 is designed as a long slit oriented parallel to the connecting wires 41, 42. Nonetheless, other shapes of the perforation 35 are possible as well.

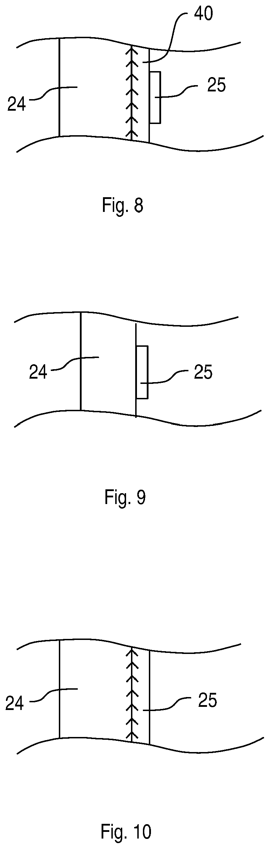

Fig. 8 shows a schematic sectional view of a further embodiment of the sorption filter element 19. In this embodiment of the sorption filter element 19, the heater system 25 is printed onto the substrate 40, wherein the substrate 40 is attached to the filter medium 24 by means of gluing, welding, or the like.

Fig. 9 shows a schematic sectional view of a further embodiment of the sorption filter element 19. In this embodiment of the sorption filter element 19, the heater system 25 is printed directly onto the filter medium 24 by means of an inkjet process using a mixture comprising silver and a liquid. Hence, the heater system 25 and the filter medium 24 are configured as an integral part.

Fig. 10 shows a schematic sectional view of a further embodiment of the sorption filter element 19. In this embodiment of the sorption filter element 19, the heater system 25 is configured as a flexible circuit board which is attached to the filter medium 24 by means of gluing, welding, or the like.

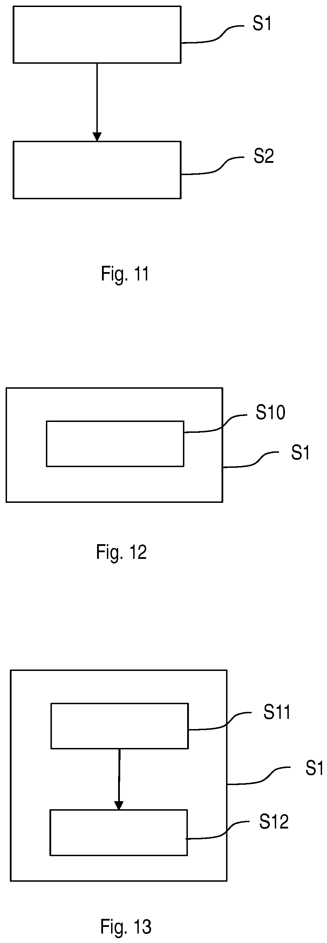

Fig. 11 shows a schematic view of one embodiment of a method of manufacturing the sorption filter element 19. In a first step S1, the filter surface 32 of the filter medium 24 is covered with the heater system 25. In a second step S2, both the filter medium 24 and the heater system 25 are repeatedly folded along parallel aligned folding axes 26 - 30 with respect to alternating directions.

Fig. 12 shows a schematic view of one embodiment of one step of the method of manufacturing the sorption filter element 19. In this embodiment of the method, the covering S1 comprises a further step S10 in which the heater system 25 is printed onto the filter medium 24 by means of the inkjet process, in particular by printing the mixture comprising silver and the liquid.

Fig. 13 shows a schematic view of a further embodiment of the one step of the method as previously described. In this embodiment of the method, the covering S1 comprises a further step S11 in which the heater system 25 is printed onto the substrate 40. In a further step S12, the substrate 40 is attached to the filter medium 24 by means of gluing, welding, or the like.

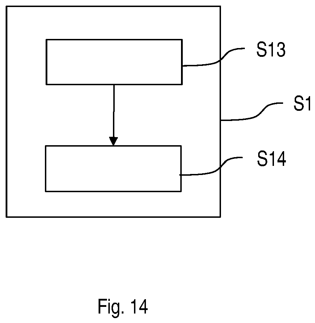

Fig. 14 shows a schematic view of a further embodiment of the one step of the method as previously described. In this embodiment of the method, the covering S1 comprises a further step S13, in which the heater system 25 is produced as a flexible circuit board. In a further step S14, the flexible circuit board is attached to the filter medium 24 by means of gluing, welding, or the like.

In the sorption mode M1, raw air RO loaded with CO2 and H2O from the passenger compartment 3 is fed to the first sorption filter device 6. The raw air RO is passed through the first sorption filter device 6 and thus through the sorption filter cartridge 18 with the sorption filter element 19. The purified raw air RO is fed back to the passenger compartment 3 as clean air RL.

In the desorption mode M2, unloaded regeneration air R1 is supplied to the first sorption filter device 6. The unloaded regeneration air R1 passes the air heating and guidance mechanism which applies heat Q to the unloaded regeneration air R1. The unloaded regeneration air R1 passes through the sorption filter cartridge 18 with the sorption filter element 19 and leaves the first sorption filter device 6 as loaded regeneration air R2. The same functionality applies to the second sorption filter device 7.

### Reference Signs List

- 1: Motor vehicle
- 2: Body
- 3: Volume/passenger compartment
- 4: HVAC system
- 5: Mechanism
- 6, 7: Sorption filter device
- 8, 9: Sorbent
- 10: Blower
- 11, 12: Temperature sensor
- 13: Heater
- 14: Temperature sensor
- 15: Blower
- 16: Heater
- 17: Temperature sensor
- 18: Sorption filter cartridge
- 19: Sorption filter element
- 20: Housing
- 21: Top side
- 22: Bottom side
- 23: Side wall
- 24: Filter medium
- 25: Heater system
- 26 - 30: Folding axes
- 31: Folding edge
- 32: Filter surface
- 33, 34: Fixation feature
- 35: Perforation
- 36: Granulate portion
- 37, 38: Filter coat
- 39: Heating patch
- 40: Substrate
- 41, 42: Connecting wire
- 43, 44: Supply wire
- M1: Sorption mode
- M2: Desorption mode
- Q: Heat
- R1, R2: Regeneration air
- RL: Clean air
- RO: Raw air
- S1-S14: Step
- U: Environment
- x: x-axis
- y: y-axis
- z: z-axis

## Claims

1. A sorption filter element (19) comprising:
a filter medium (24); and
a heater system (25) covering at least one filter surface (32) of the filter medium (24),
wherein the filter medium (24) and the heater system (25) are repeatedly folded along parallel aligned folding axes (26 - 30).

2. The sorption filter element according to claim 1, wherein the sorption filter element (19) has a shape of a harmonica comprising a plurality of folding edges (31), each of the plurality of folding edges (31) being formed by folding the heater system (25) and the filter medium (24) along the folding axes (26 - 30).

3. The sorption filter element according to claim 1 or 2, wherein the heater system (25) covers at least 30%, 40%, 50%, 60%, 70%, 80%, 90%, or 95% of the at least one filter surface (32) of the filter medium (24).

4. The sorption filter element according to one of claims 1 to 3, wherein the filter medium (24) comprises a granulate portion (36).

5. The sorption filter element according to one of claims 1 to 4, wherein the heater system (25) comprises a heating foil, a heating wire and/or a heating coil.

6. The sorption filter element according to one of claims 1 to 5, wherein the heater system (25) comprises a number of heating patches (39), each of the number of heating patches (39) being electrically connected to at least two supply wires (43, 44) oriented perpendicular to the folding axes (26 - 30).

7. The sorption filter element according to one of claims 1 to 6, wherein the heater system (25) is printed onto a substrate (40) attached to the filter medium (24) by gluing or welding.

8. The sorption filter element according to one of claims 1 to 6, wherein the heater system (25) and the filter medium (24) are an integral part, and
wherein the heater system (25) is printed onto the filter medium (24).

9. The sorption filter element according to one of claims 1 to 6, wherein the heater system (25) is a flexible circuit board attached to the filter medium (24) by gluing or welding.

10. The sorption filter element according to one of claims 1 to 6, wherein a distance between the heater system (25) and the at least one filter surface (32) of the filter medium (24) is less than 30 mm.

11. The sorption filter element according to claim 7, wherein the heater system (25) and/or the substrate (40) comprise a perforation (35) oriented perpendicular to the folding axes (26 - 30).

12. A sorption filter cartridge (18) for air conditioning an interior of a motor vehicle (1), the sorption filter cartridge (18) comprising:
the sorption filter element (19) according to one of claims 1 to 11; and
a fluid permeable housing (20).

13. A method of manufacturing a sorption filter element (19) comprising a filter medium (24) and a heater system (25), the method comprising:
covering (S1) at least one filter surface (32) of the filter medium (24) with the heater system (25); and
repeatedly folding (S2) the filter medium (24) and the heater system (25) along parallel aligned folding axes (26 - 30).

14. The method according to claim 13, wherein the covering (S1) comprises printing (S10) the heater system (25) onto the filter medium (24) by an inkjet process, in particular, by printing a mixture comprising silver and a liquid.

15. The method according to claim 13, wherein the covering (S1) comprises:
printing (S11) the heater system (25) onto a substrate (40); and
attaching (S12) the substrate (40) to the filter medium (24) by gluing or welding.

16. The method according to claim 13, wherein the covering (S1) comprises:
producing (S13) the heater system (25) as a flexible circuit board; and
attaching (S14) the flexible circuit board to the filter medium (24) by gluing or welding.
